Europäisches Patentamt

European Patent Office

Office européen des brevets

(19)

(11) Numéro de publication : **0 070 949**
**B1**

(12) # FASCICULE DE BREVET EUROPÉEN

(45) Date de publication du fascicule du brevet :
07.05.86

(51) Int. Cl.⁴ : **H 04 B   1/66**

(21) Numéro de dépôt : **81430024.0**

(22) Date de dépôt : **28.07.81**

(54) **Procédé de transmission voix et données numériques et dispositif de mise en œuvre dudit procédé.**

(43) Date de publication de la demande :
09.02.83 Bulletin 83/06

(45) Mention de la délivrance du brevet :
07.05.86 Bulletin 86/19

(84) Etats contractants désignés :
DE FR GB

(56) Documents cités :
EP-A- 0 002 998
FR-A- 2 305 070
FR-A- 2 339 924
FR-A- 2 389 277
US-A- 3 139 487
US-A- 3 622 704
JOURNEES INTERNATIONALES D'ETUDES SUR LA TRANSMISSION, 17 et 18 juin 1974 Liège (BE) A.I.M. LIEGE (BE) R. GRAINSON "Les transmissions de données en Belgique", pages 1 à 12
IBM TECHNICAL DISCLOSURE BULLETIN, volume 12, no. 9, février 1970 NEW YORK (US) P.C. AUSTRUY et al. "Voice and data simultaneous transmission" pages 1470 et 1471
EUROCON FALL 79, 19e IEEE COMPUTER SOCIETY INTERNATIONAL CONFERENCE WASHINGTON D.C., 4-7 septembre 1979 IEEE NEW YORK (US) F. SAMMARTINO et al. "A microprocessor based simultaneous voice and data network processor", pages 197 à 202

(73) Titulaire : **International Business Machines Corporation**
**Old Orchard Road**
**Armonk, N.Y. 10504 (US)**
**DE GB**
**Compagnie IBM FRANCE**
**5 Place Vendôme**
**F-75000 Paris 1er (FR)**
**FR**

(72) Inventeur : **Galand, Claude**
**56 avenue des Tuilières**
**F-06800 Cagnes-Sur-Mer (FR)**
Inventeur : **Nussbaumer, Henri**
**La Font Antique**
**F-06610 La Gaude (FR)**

(74) Mandataire : **Tubiana, Max**
**Compagnie IBM France Département de Propriété Industrielle**
**F-06610 La Gaude (FR)**

## Description

La présente invention traite de la transmission de signaux vocaux et plus particulièrement de la transmission simultanée, sur lignes téléphoniques de signaux vocaux et de données.

Etat de la Technique

Le coût élevé des voies de transmission incite à la recherche de moyens de compression permettant de faire passer sur une même voie, les signaux provenant de plusieurs sources différentes. C'est ainsi que l'on a développé des techniques permettant de concentrer sur une même ligne des signaux d'origine vocale et des données. Certaines de ces techniques utilisent les silences de la voix pour transmettre des données ; d'autres découpent artificiellement une zone de fréquences dans le spectre du signal vocal, pour y loger des données. A titre d'exemple, on notera le système décrit dans l'IBM Technical Disclosure Bulletin Vol. 12 n° 9 Feb. 1970 pp. 1470-1471. Le signal vocal y est réparti entre plusieurs bandes de fréquences dont l'une est transposée par modulation dans une bande différente de celle qu'elle occupait à l'origine, de manière à être libérée pour y introduire des données. Les moyens de mise en œuvre de ces techniques ne permettent actuellement pas d'obtenir un rapport qualité/prix satisfaisant.

D'un autre côté le coût des dispositifs de traitement numérique du signal étant actuellement relativement faible, on a tendance à développer des techniques de compression de la voix entièrement numériques. C'est ainsi que pour transmettre simultanément plusieurs signaux vocaux sur une même ligne téléphonique on a utilisé des vocodeurs (codeurs de la voix) à faible taux de bits (2 400 à 4 800 bps) que l'on a multiplexés numériquement sur une même ligne téléphonique équipée de modems travaillant à 4 800 ou 9 600 bps. Malheureusement, les vocodeurs à faible taux de bits utilisés sont souvent basés sur des techniques nécessitant une mesure de la fréquence fondamentale. Les aléas de cette mesure réduisent considérablement la qualité de la voix transmise.

Exposé de l'invention

L'un des objets de la présente invention est de fournir un procédé permettant la concentration sur une même ligne téléphonique d'au moins une voix et des données pures pour un rapport qualité/prix accru.

Un autre objet de la présente invention est de permettre la transmission sur un nombre n de lignes téléphoniques, des signaux d'origine vocale et de données provenant de sources en nombre N supérieur à n.

Plus précisément l'invention traite d'un procédé destiné à assurer la transmission simultanée sur ligne téléphonique de signaux vocaux et de données en utilisant des techniques de traitement de la voix selon lesquelles le signal électrique d'origine vocale contenu dans une bande basses fréquences (dite bande de base) est séparé du reste du signal vocal, ledit procédé étant caractérisé en ce que la bande de base est transmise sous forme analogique sur la ligne de transmission, tandis que des informations ou paramètres caractéristiques de la voix contenus dans la bande hautes fréquences sont codés en numérique et multiplexés avec les données à transmettre, puis injectés sur ladite ligne de transmission après passage à travers un modulateur.

D'autres objets, caractéristiques et avantages de la présente invention ressortiront mieux de l'exposé qui suit fait en référence aux dessins annexés à ce texte, qui représentent un mode de réalisation préféré de celle-ci.

Description des Figures

Figure 1  schéma de principe d'un codeur émetteur de la voix appartenant à l'état de la technique.
Figure 2  diagramme de fréquences associé au dispositif de la figure 1.
Figure 3  schéma d'un récepteur décodeur de la voix appartenant à l'état de la technique.
Figure 4  schéma d'un dispositif émetteur mettant en œuvre l'invention.
Figure 5  diagramme de codage utilisé dans le dispositif de la figure 4.
Figure 6 à 9  détails d'éléments du dispositif de la figure 4.
Figure 10  schéma d'un dispositif récepteur selon l'invention telle que réalisée selon le schéma de la figure 4.
Figures 11-12  schémas d'émetteur et de récepteur représentant un autre mode de mise en œuvre de l'invention.
Figure 13  schéma d'un autre mode de mise en œuvre de l'invention (émetteur).
Figure 14 à 17  schémas de détails d'éléments de l'émetteur de la figure 13.
Figure 18  schéma du récepteur pour la mise en œuvre de l'invention utilisant l'émetteur de la figure 13.
Figure 19  schéma d'un circuit du récepteur de la figure 18.

Description Détaillée de l'Invention

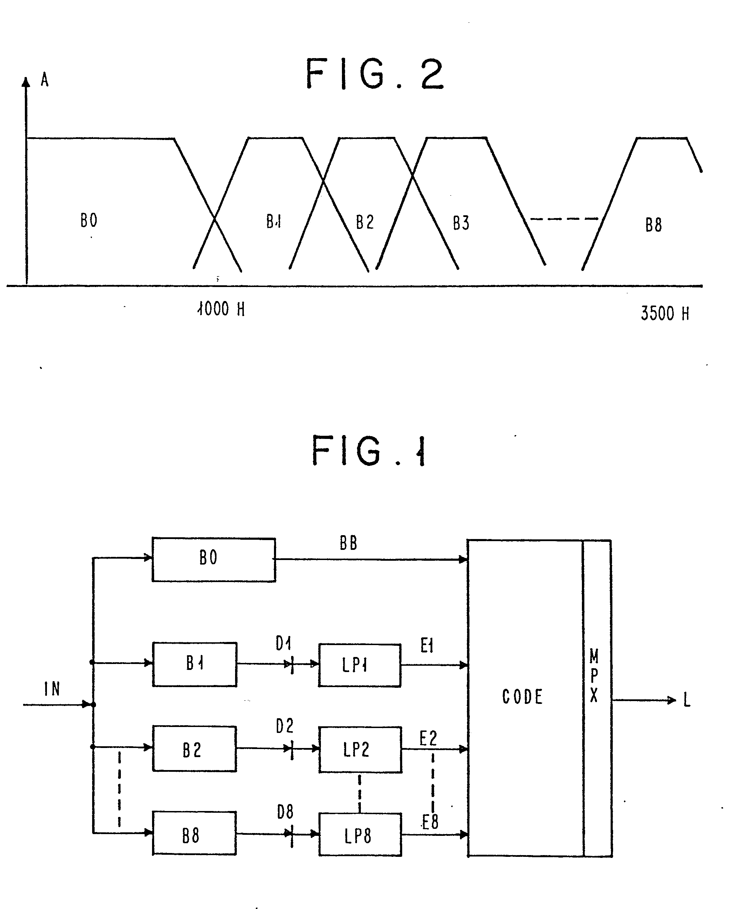

On a représenté sur la figure 1 le schéma de principe d'un codeur de la voix (vocodeur) classique de type dit VEV (Voice-Excited Vocoder). Le signal vocal à coder est introduit sur l'entrée IN du dispositif. Il passe alors à travers un certain nombre de filtres comportant, d'une part un filtre passe-bas BO (1-1 000 Hz par exemple), et d'autre part un banc de filtres passe-bandes B1 à B8, occupant chacun un canal haute fréquence (HF). La juxtaposition des canaux (ou sous-bandes) HF couvre la gamme de fréquences du signal vocal allant de 1 000 Hz à 3 500 Hz environ (voir figure 2). Le filtre passe-bas B0 extrait une bande basse-fréquences, dite bande de base (BB), du signal vocal apparaissant en IN. La sortie de chacun des filtres passe-bandes B1 à B8, passe à travers un redresseur D1 à D8, et un filtre passe-bas LP1 à LP8. On obtient donc en sortie des filtres LP1 à LP8, des informations E1 à E8 relatives à l'énergie contenue dans chacune des bandes B1 à B8 (canaux HF). Après conversion en numérique et codage dans CODE, la bande de base du signal vocal et les informations E1 à E8, sont en principe multiplexées en MPX et transmises sur une voie de transmission L.

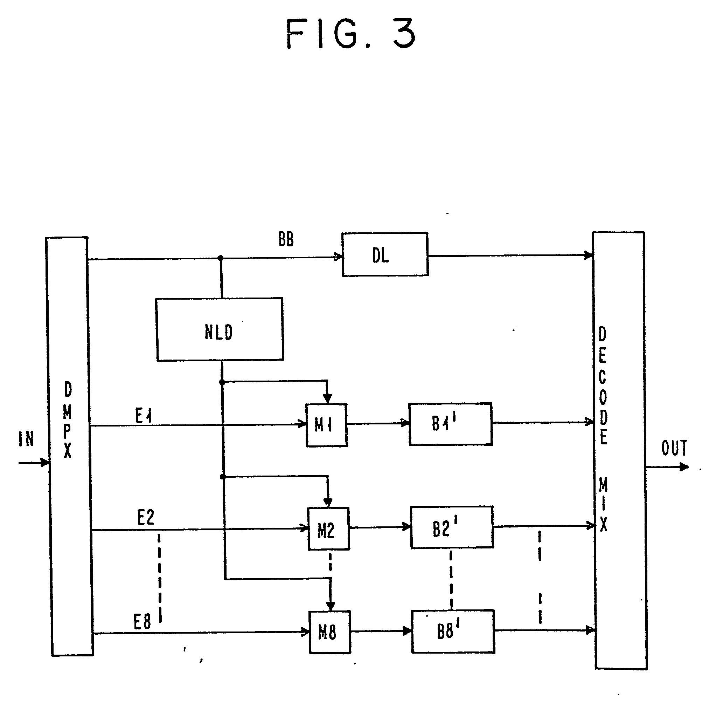

La figure 3 représente un schéma du récepteur placé à l'autre extrémité de la voie de transmission L. Un démultiplexeur DMPX sépare les unes des autres les différentes informations, à savoir bande de base et énergie de chaque canal HF. La bande de base est introduite dans une ligne à retard DL et dans un générateur de distorsion non linéaire NLD. L'opération effectuée en NLD étale le spectre de la bande de base pour fournir une information dite d'excitation à un ensemble de modulateurs M1 à M8. Chacun desdits modulateurs reçoit par ailleurs l'information d'énergie E1, E2, ..., ou E8. Les sorties des modulateurs M1 à M8 sont filtrées par des filtres B1' à B8', respectivement, semblables aux filtres passe-bandes B1 à B8. Les informations issues de DL et B1' à B8', sont décodées et mélangées en DECODE MIX pour reconstituer le signal vocal d'origine.

Ce qui précède concerne des dispositifs conventionnels dont on trouvera une abondante description dans la littérature, et notamment dans l'ouvrage de James L. Flanagan intitulé : « Speech Analysis Synthesis and Perception » publié en 1965 aux Editions Springer-Verlag Berlin Heidelberg New York.

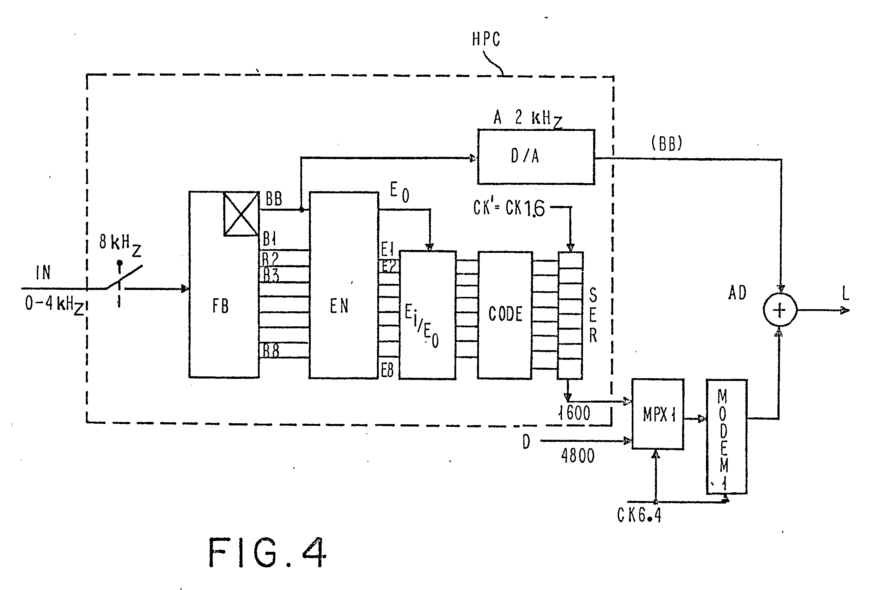

La figure 4 représente le schéma de principe d'un dispositif émetteur permettant une transmission voix et données selon l'invention utilisant notamment les techniques de type VEV citées plus haut.

On notera cependant que la bande de base est transmise en analogique sur la ligne L sans subir de traitement particulier, tandis que les informations relatives aux énergies des canaux HF sont multiplexées avec des données (D) avant d'être transformées en analogique (en modem 1) et rajoutées à la bande de base pour être transmises sur la ligne L.

La figure 4 représente un mode de réalisation de l'invention. Le signal vocal, dans la bande dite téléphonique (0-4 000 Hz par exemple) est échantillonné à sa fréquence de Nyquist (8 KHz). Il est ensuite soumis à un banc de filtres couvrant la bande de base (sous-bande BB) et les sous-bandes HF selon la répartition du Tableau I ci-dessous ;

Tableau I

| | Largeur de bande | Nombre d'échantillons par bande sur 20 ms |
|---|---|---|
| Bande de base: Sous-Bande BB | 0,250 à 0,750 kHz | 20 |
| Canaux (Sous-bandes) HF: | | |
| B1 | 0,750 à 1 kHz | 10 |
| B2 | 1 à 1,25 kHz | 10 |
| B3 | 1,25 à 1,50 kHz | 10 |
| B4 | 1,5 à 1,75 kHz | 10 |
| B5 | 1,75 à 2 kHz | 10 |
| B6 | 2 à 2,5 kHz | 20 |
| B7 | 2,5 à 3 kHz | 20 |
| B8 | 3 à 3,5 kHz | 20 |

Le banc de filtres FB est de type connu (que l'on précisera plus loin), et qui en plus du filtrage proprement dit effectue des opérations dites de décimation. Ceci étant, pour tout tronçon de signal vocal de 20 ms échantillonné à 8 KHz (soit 160 échantillons) se présentant à l'entrée du filtre FB, on trouvera 160 échantillons en tout, sur l'ensemble des sorties de FB, pour le même intervalle de temps de 20 ms. Ces échantillons seront répartis comme indiqué dans la colonne de droite du tableau. Il conviendrait en principe d'ajouter 10 échantillons de la sous-bande 0-0,250 KHz et 20 échantillons de la sous-bande 3,5 à 4 KHz. Mais on a choisi ici de ne pas utiliser ces deux sous-bandes. Si on désigne par $X_i^j$ les échantillons d'une sous-bande donnée où $i = 0, 1, ..., 8$ représente le rang de la sous-bande considérée, à la sortie du banc de filtres FB et $j = 1, 2, ..., p$ le rang de l'échantillon considéré, dans un tronçon donné de 20 ms de signal on a donc : $p = 20$ pour les sous-bandes B0, B6, B7 et B8, et $p = 10$ pour les sous-bandes B1, B2, B3, B4 et B5.

La bande de base BB et les sous-bandes B1 à B8, sont traitées pour en extraire des informations relatives aux énergies des signaux qu'elles contiennent. Plus précisément on s'intéresse ici aux rapports entre les énergies des sous-bandes HF et l'énergie de la bande de base, énergies considérées sur les intervalles de 20 ms mentionnés plus haut. Les sous-bandes BB et B1 à B8 sont donc envoyées dans un dispositif EN calculant l'énergie Ei ($i = 0, 1, ..., 8$) de chaque sous-bande à partir de la formule ;

$$Ei = \sqrt{\sum_{j=1}^{p} (X_i^j)^2} \,. \tag{1}$$

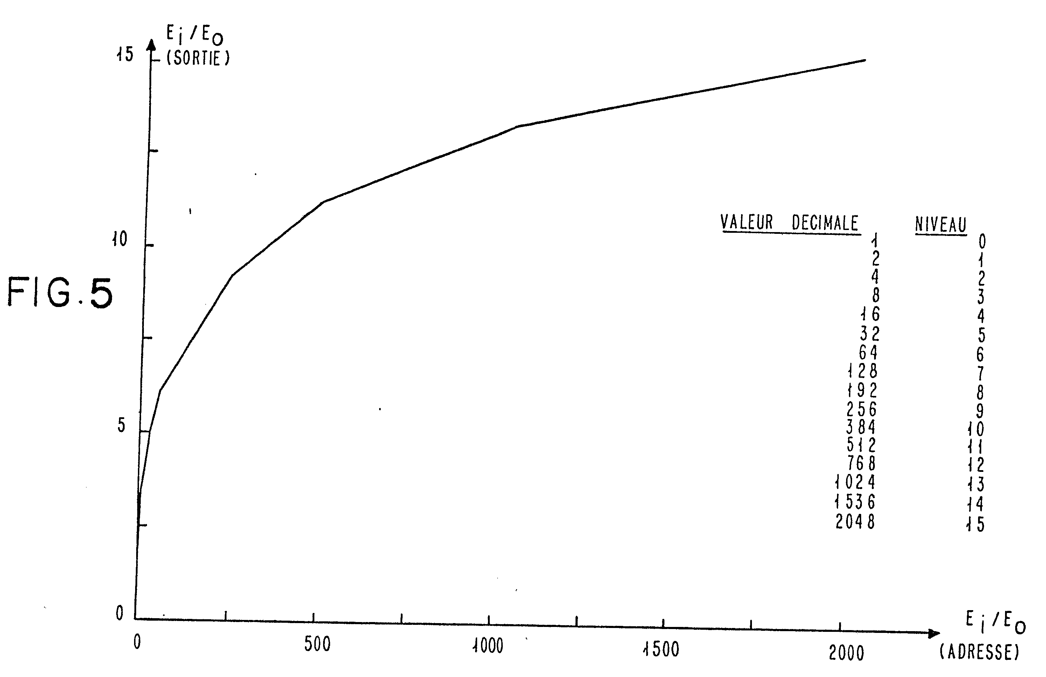

Le dispositif Ei/Eo effectue ensuite le calcul du rapport entre l'énergie de chaque canal HF et l'énergie (Eo) de la bande de base. En d'autres termes, l'énergie des sous-bandes HF est normalisée par rapport à l'énergie de la bande de base. On dispose en sortie du dispositif Ei/Eo, de huit paramètres traduisant des énergies normalisées codées à 12 bits. Ces informations d'énergie sont transcodées en CODE en mots de 4 bits. L'opération de transcodage peut être réalisée à l'aide d'une table à échelle logarithmique (voir figure 5) qui adressée par des mots de 12 bits fournit en sortie des mots de 4 bits. Par exemple, si Ei/Eo = 60 en décimal, il est codé à 12 bits par 000000111100. Pour le transcodage, la valeur décimale disponible la plus proche de 60 étant 64, c'est-à-dire le niveau six de la Table, on le représente à 4 bits par 0110. Les mots transcodés à 4 bits sont introduits dans un sérialiseur SER que l'on peut donc vider à un rythme de :

$$\frac{8 \times 4}{20 \times 10^{-3}} = 1\,600 \text{ bps} \,.$$

Les 1 600 bps fournis par SER peuvent alors être multiplexés en MPX1 à des données pures (D) se présentant au rythme de 4 800 bps pour fournir un train de bits à 6 400 bps.

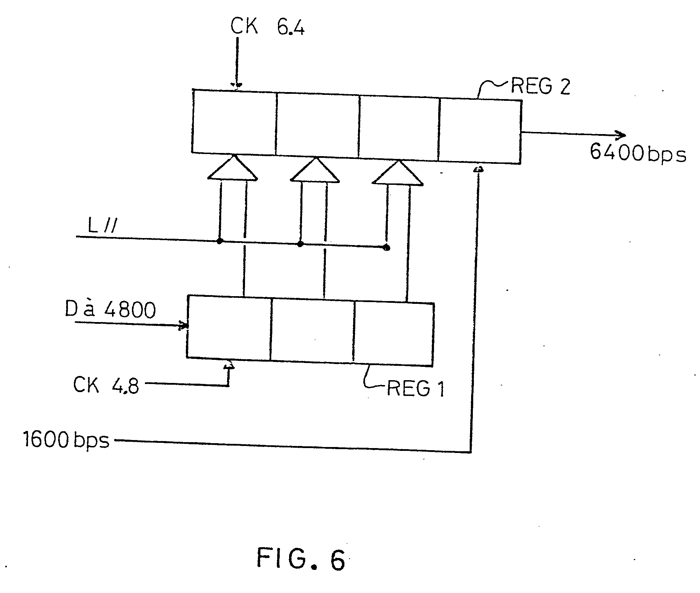

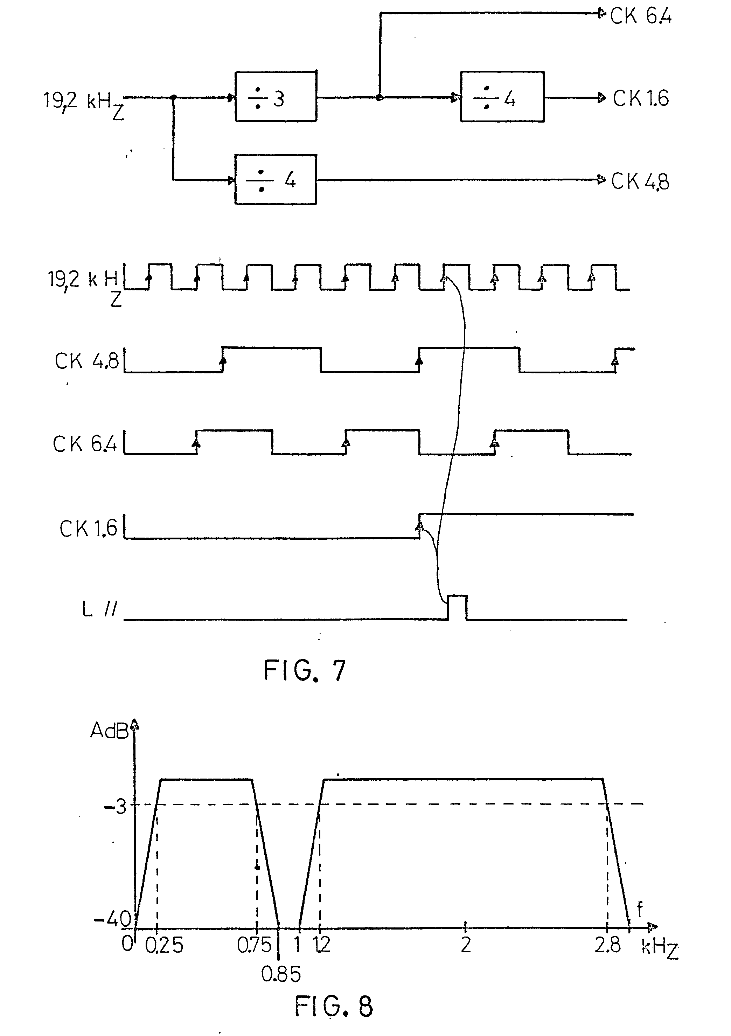

Le schéma du multiplexeur MPX1 est représenté sur la figure 6. Un premier registre REG1 contrôlé par une horloge CK 4.8 (4.8 signifiant 4.8 KHz) est utilisé pour désérialiser les données pures. Le registre REG1 est déchargé dans un registre REG2 sous le contrôle d'un signal de synchronisation désigné par Load. Le registre REG2 possède en outre une position pour les données à 1 600 bps relatives aux rapports Ei/Eo représentant des informations ou paramètres caractéristiques du signal vocal. Le registre REG2 est vidé en série au rythme de 6 400 bps sous le contrôle d'une horloge CK 6.4. La synchronisation des signaux d'horloge entre eux est réalisée en partant d'une horloge commune à 19 200 Hz comme le montre la figure 7.

Les informations numériques à 6 400 bps sortant de REG2 sont transmises à un MODEM 1 qui peut être un modem du type IBM 3865. On choisira de transmettre à 1 600 bauds (en groupant les bits à transmettre en quadbits) avec une porteuse à 2 000 Hz et une bande passante à 3 dB s'étendant entre 1 200 et 2 800 Hz.

Le signal sortant du modem est rajouté en AD à la bande de base avant d'être transmis sur la ligne téléphonique L. La figure 8 montre l'allure générale du spectre du signal transmis sur la ligne L. Ce spectre se compose d'une bande de fréquences allant de 0,250 à 0,750 KHz contenant la bande de base du signal vocal, et d'une bande de fréquences allant de 1,2 à 2,8 KHz occupée par l'information issue de MODEM 1.

Ainsi, le dispositif de la figure 4 permet de transmettre sur une même ligne téléphonique à la fois un signal vocal et des données pures. Le dispositif de transmission comporte essentiellement un ensemble désigné par HPC regroupant des moyens permettant de traiter le signal vocal pour en extraire d'une part un signal analogique de bande de base et d'autre part un ensemble de paramètres caractéristiques de la voix. Les paramètres sont ensuite multiplexes avec des données pures et soumis à une opération de modulation avant d'être ajoutés à la bande de base et transmis sur la ligne.

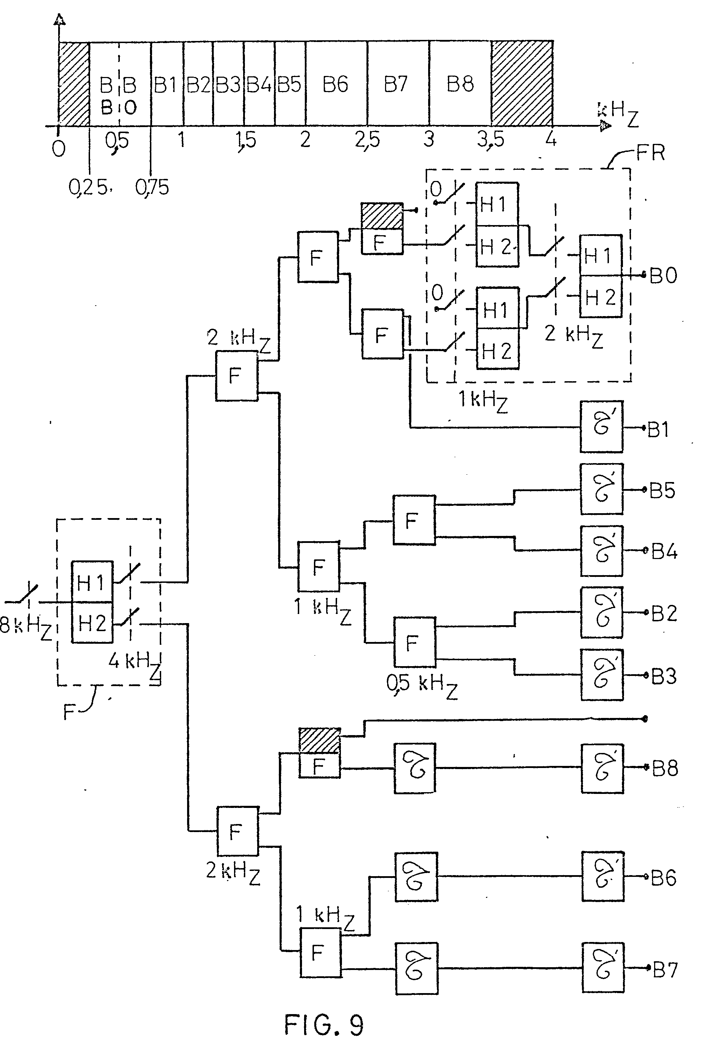

On a représenté sur la figure 9 un mode de réalisation du banc de filtres FB s'inspirant des techniques de filtrage et décimation décrites dans le brevet français No 77 13995 déposé le 29 avril 1977 par la demanderesse et publié sous le No 2 389 277, (voir notamment les figures 4 et 5 dudit brevet) ainsi que dans l'article présenté par D. Esteban et C. Galand au Congrès International d'Acoustique de Madrid 1977, sous le titre « Direct Approach to Quasi Perfect Decomposition of Speech In Sub-Bands ». On peut aussi consulter la publication IBM Technical Disclosure Bulletin Vo. 19, No 9, février 1977, pages 3438-39. On rappellera simplement que le banc de filtres FB est réalisé selon une structure en arbre dans laquelle chaque étage est composé d'éléments F comportant chacun deux filtres demi-bande (un filtre passe-bas H1 et un filtre passe-haut H2) et des commutateurs de décimation. Chaque commutateur est actionné à une fréquence moitié de la fréquence à laquelle les échantillons entrent dans l'élément F correspondant. Cette opération dite de décimation, qui correspond au ré-échantillonnage à la fréquence de Nyquist de chaque signal filtré, permet de maintenir la quantité d'information constante à travers l'arbre. D'autre part la recomposition du signal d'origine à partir des sous-bandes se fait en utilisant un filtre symétrique (voir figure 4 du brevet précité ; 77 13995) dans lequel les commutateurs réalisent une opération dite d'interpolation (introduction d'un zéro entre deux échantillons consécutifs) permettant de ramener la fréquence d'échantillonnage du signal à sa valeur initiale. Ces rappels étant faits, on peut donc comprendre aisément le schéma de la figure 9 représentant le filtre FB utilisé dans le dispositif de transmission voix et données de la figure 4. On a représenté sur la figure 9 un schéma du filtre FB ainsi qu'une représentation simplifiée du diagramme de filtrage dans le domaine des fréquences. Sur ce diagramme, on remarquera que la bande de base comporte deux parties qu'il faut donc recombiner pour obtenir la bande de base BB. On a d'autre part hachuré, sur le diagramme de la figure 9, les sous-bandes non utilisées. Le schéma du filtre FB comporte tout d'abord trois étages semblables au bout desquels la fréquence d'échantillonnage est ramenée de 8 KHz. Le quatrième étage comporte une partie continuant l'arbre à l'aide d'éléments F et fournissant les sous-bandes BB (en deux-demies sous-bandes), B1, B5, B4, B2 et B3, et une partie fournissant les sous-bandes B8, B6 et B7 directement. La recombinaison des deux-demies sous-bandes de B0 se fait en FR en utilisant les techniques d'interpolation citées plus haut. A noter que l'on a rajouté des éléments à retard $\tau$ et $\tau'$. Les $\tau$ compensent les retards dus au quatrième étage d'éléments F, tandis que les $\tau'$ compensent les retards dus à FR. A noter aussi que l'on a hachuré les sorties qui auraient fourni les bandes non utilisées.

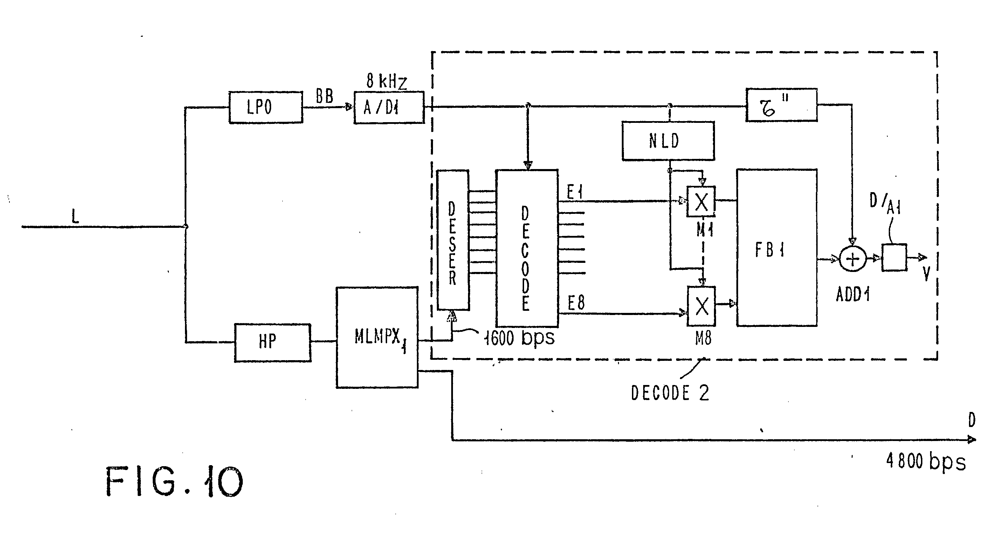

La figure 10 représente le schéma du récepteur placé à l'extrémité de la ligne L et chargé de reconstituer les informations voix et données d'origine. Le signal reçu est filtré en LPO et HP de manière à séparer la bande de base BB du signal transmis par le MODEM 1. Les gabarits de ces filtres sont donc définis en fonction du schéma de la figure 8. La bande haute (1,2 à 2,8 KHz) issue de HP est transmise à un modem démultiplexeur MDMPX1. Les modem et démultiplexeur de DMPX1 sont symétriques de ceux des figures 4, 6 et 7. Ils fournissent donc d'une part les données pures (D) à 4 800 bps et d'autre part les informations à 1 600 bps relatives aux énergies des bandes hautes du signal vocal normalisées par l'énergie de la bande de base BB. Une désérialisation en DESER desdits 1 600 bps sépare les unes des autres les informations Ei/Eo pour i = 1, 2, ..., 8. Ces informations codées à 4 bits sont traitées en DECODE où s'opère tout d'abord un transcodage de 4 bits en 12 bits selon une loi inverse de la loi logarithmique de la figure 5. La conversion de 4 en 12 bits peut-elle aussi s'opérer par lecture de Table. Le signal de la bande de base issu de LPO est échantillonné à 8 KHz et codé à 12 bits en A/D1. Le signal de bande de base issu de A/D1 est transmis à un dispositif DECODE où il est tout d'abord « décimé » par prélèvement d'un échantillon sur quatre pour être ramené à 2 KHz. Il est ensuite traité pour calculer l'énergie Eo de la bande de base sur des tronçons de 20 ms. Cette énergie est utilisée en DECODE pour multiplier l'information fournie par chacune des sorties du désérialiseur DESER. Cette opération de renormalisation des énergies HF par Eo est nécessaire car la transmission de la bande de base — qui se fait en analogique — n'est pas à gain unitaire. On obtient ainsi en sortie de DECODE, les huit informations E1 à E8. Les informations E1 à E8 modulent en M1 à M8 la bande de base étalée en fréquence par le dispositif de distorsion non linéaire NLD (voir aussi figure 3). Les sorties des modulateurs M1 à M8 sont transmises à un dispositif FB1. Dans FB1, chaque sortie de modulateur M1 à M8 est tout d'abord filtrée par un filtre dont la bande passante est définie en fonction du Tableau I. Les sorties de ces filtres passe-bandes sont ensuite recombinées à l'aide d'un filtre interpolateur déduit de celui de la figure 9 par symétrie (voir figure 4, du brevet français 77 13995 cité plus haut). La sortie de FB1 est ajoutée en ADD1 à la bande de base issue de A/D1 et retardée de $\tau''$. $\tau''$ est destiné à compenser les retards dus au traitement des sous-bandes HF en MDMPX1 et FB1. Il suffit ensuite de transformer en analogique en D/A1 l'information issue de ADD1 pour obtenir le signal vocal transmis sur la ligne L.

Bien que l'on ait décrit jusqu'ici l'invention appliquée aux vocodeurs à bande de base comportant une analyse de la bande hautes-fréquences par un banc de filtre, il est évident qu'on peut l'appliquer à d'autres types de vocodeurs dans lesquels il est possible d'isoler, une partie de l'information relative au signal vocal (exemple, la bande de base) ; tandis que le reste de ladite information constitué par des paramètres caractéristiques de la voix subirait un codage numérique, rendant possible un multiplexage avec des données pures, avant conversion en analogique, mélange avec la bande de base et transmission sur ligne. Les vocodeurs dits à prédiction linéaire notamment, entrent dans cette catégorie.

Un vocodeur à prédiction linéaire a été décrit dans le brevet européen publié sous le numéro 0002998 et intitulé : « Procédé de compression de données relatives au signal vocal et dispositif mettant en œuvre ledit procédé ».

Le procédé, décrit dans le brevet européen cité ci-dessus, décompose l'information relative au signal vocal en trois informations différentes désignées respectivement par ENERG, SIGNAL et COEF. SIGNAL contient les informations relatives à la bande basses-fréquences (bande de base) du signal vocal. ENERG, traduit l'information d'énergie contenue dans la partie hautes fréquences de la bande téléphonique.

Quant à l'information COEF elle représente des coefficients dits de corrélation partielle (ou de réflection) dérivés du signal vocal. La mise en œuvre du dispositif décrit dans le brevet européen précité a montré que 70 % environ des bits de codage devaient être réservés à SIGNAL, tandis que ENERG et COEF pouvaient se contenter des 30 % restants. Il en résulte que ce mode de codage de la voix se prête particulièrement bien à la réalisation d'un procédé de transmision voix et données selon la présente invention. Pour ce faire, on maintiendrait la bande de base (SIGNAL) en analogique, et on ne coderait en numérique que ENERG et COEF que l'on pourrait alors éventuellement multiplexer avec des données pures.

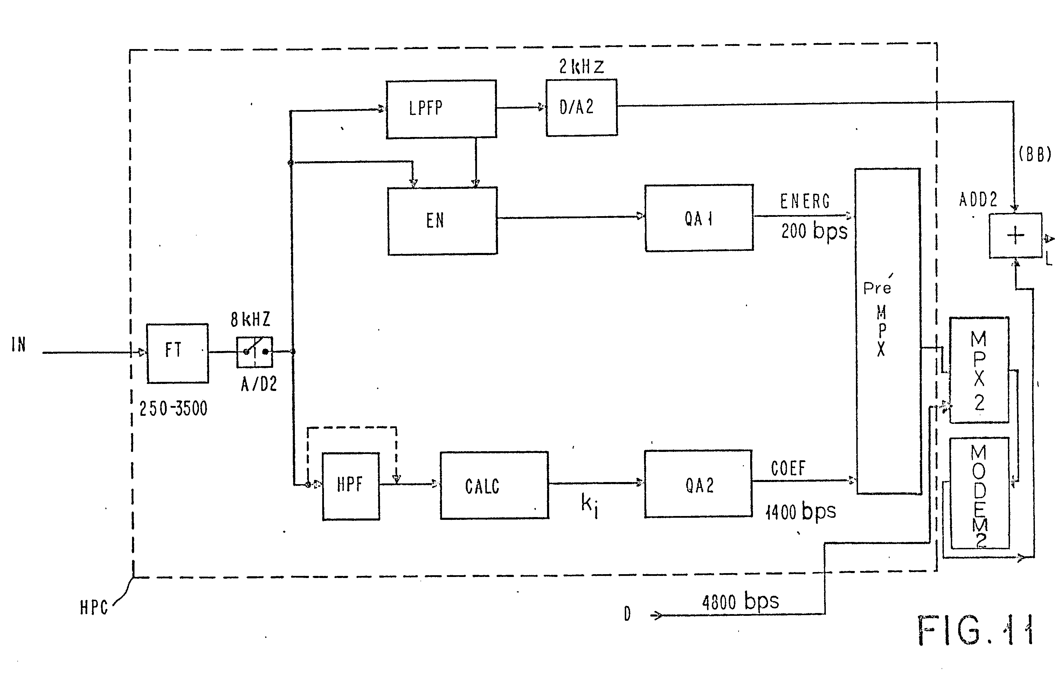

On a représenté sur la figure 11 le dispositif d'émission utilisant le codeur de la figure 1 du brevet européen précité, que l'on considérera comme étant incorporé à la présente invention, par référence. Ledit codeur a été modifié pour les besoins de la présente invention. Tous les éléments décrits dans le brevet européen précité ne seront donc pas décrits à nouveau. On notera simplement que le signal d'origine vocale se présentant à l'entrée IN est filtré en FT dont la bande passante s'étend entre 250 et 3 500 Hz environ. Le signal issu de FT est échantillonné à 8 kHz en A/D2 pour fournir des échantillons Sn codés en numérique. La partie hautes fréquences du spectre du signal issu de A/D2 et fournie par un filtre HPF sert à calculer (en CALC) huit paramètres ou coefficients de corrélation partielle $k_i$. Ces coefficients $k_i$, une fois quantifiés en QA2 fournissent l'information COEF. Plus précisément on a choisi de coder globalement les huit coefficients k1 à k8 avec 28 bits en utilisant par exemple la technique décrite dans « Piecewise Linear Quantization of LPC Reflection Coefficients » publiée par C. Un et S. Yang dans Proc. International Conf. on ASSP, Hartford, mai 1977.

On utilise une quantification attribuant plus de bits aux premiers coefficients qu'aux autres. Par exemple, la répartition peut être :

| | |
|---|---|
| K1 | 5 bits |
| K2 | 5 bits |
| K3 | 3 bits |
| K4 | 3 bits |
| K5 | 3 bits |
| K6 | 3 bits |
| K7 | 3 bits |
| K8 | 3 bits |

Ceci représente un total de 28 bits sur 20 ms soit un taux de :

$$\frac{28}{20 . 10^{-3}} = 1\,400 \text{ bps} .$$

D'autre part, l'énergie de la bande hautes fréquences est mesurée et normalisée par rapport à l'énergie de la bande de base en EN et quantifiée en QA1 lequel fournit l'information ENERG à laquelle on attribue 4 bits toutes les 20 ms, soit un taux de 200 bps. Les informations COEF et ENERG sont multiplexées en MPX(2) avec des données pures (D). La sortie du multiplexeur MPX(2) est transmise par un MODEM 2.

Les MPX (2) et MODEM (2) en tous points semblables aux MPX1 et MODEM 1 de la figure 4 peuvent être combinés en un dispositif unique du genre modem IBM 3865 ayant les caractéristiques définies plus haut pour MODEM 1. A noter cependant, un prémultiplexeur multiplexant les informations COEF et ENERG en un train unique de bits à 1 600 bps. Par ailleurs, un filtre passe-bas LPFD de bande passante s'étendant entre 250 et 750 Hz est connecté au dispositif A/D pour isoler par filtrage la bande de base du signal vocal. Le signal en bande de base est converti en analogique à l'aide d'un convertisseur D/A2 travaillant à 2 kHz par exemple. Les sorties du MODEM (2) et de D/A2 sont mélangées entre elles dans un additionneur analogique ADD2 dont la sortie est transmise sur la ligne de transmission L. A noter que l'on aurait naturellement pu, extraire la bande de base du signal vocal directement à partir du signal analogique et économiser ainsi le convertisseur D/A2.

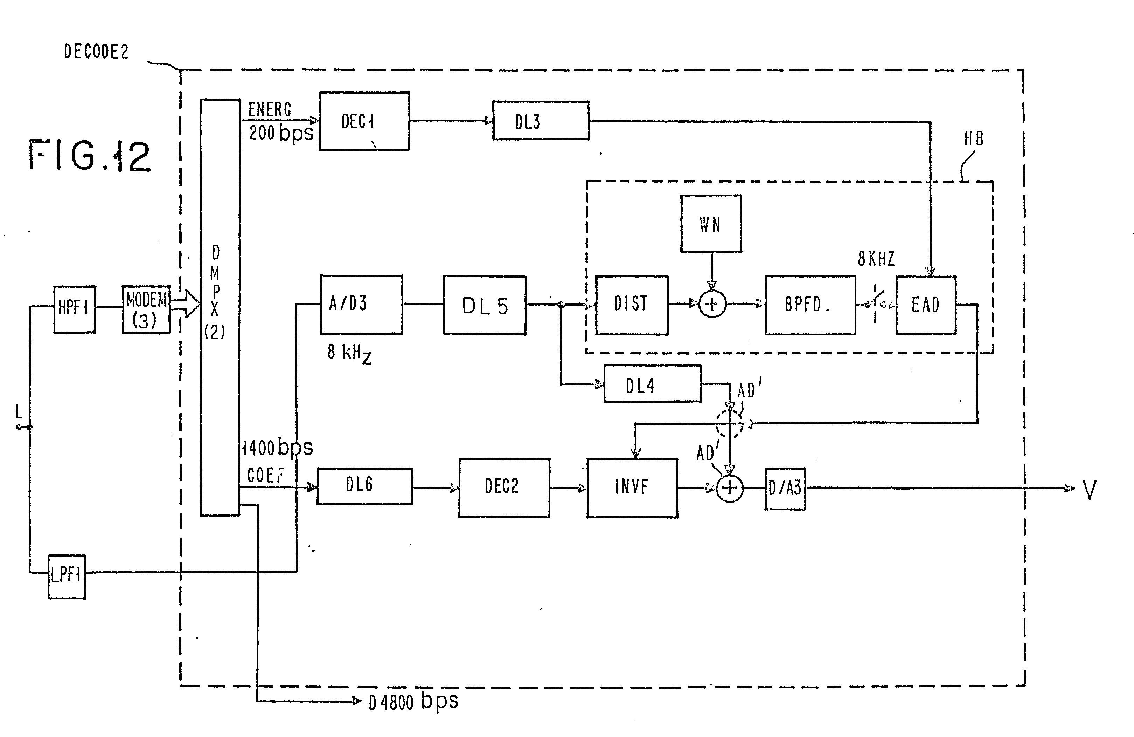

La figure 12 représente le récepteur correspondant à l'émetteur de la figure 11. Ce récepteur utilise le dispositif de la figure 8 du brevet européen précité auquel on se reportera pour une description détaillée des divers éléments. La ligne de transmission L est connectée à un filtre passe-bas LPF1 et à un filtre passe-haut HPF1 couvrant respectivement les gammes de fréquences (à 3 dB) 250-750 Hz et de 1 200 à 2 800 Hz. Le signal sortant de HPF1 est démodulé par un MODEM (3) puis démultiplexé en DMPX (2). Le démultiplexeur DMPX (2) sépare les données pures à 4 800 bps (envoyées sur la sortie D 4800 bps) des informations ENERG et COEF. Le filtre passe-bas LPF1 fournit l'information relative à la bande de base du signal vocal. Cette bande de base est échantillonnée à 8 kHz et codée en numérique en A/D3 avant d'être recombinée avec ENERG et COEF pour reconstituer le signal vocal. Cette recombinaison est effectuée selon les indications fournies dans le brevet européen précité. En bref, l'information COEF est retardée en DL6 et décodée en DEC2 pour fournir les coefficients du filtre inverse INVF. D'autre part, le trajet du signal sortant de A/D3 est scindé en deux voies, l'une directe, l'autre indirecte. La voie indirecte comprend un

**0 070 949**

générateur de bande haute HB dans lequel on étale le spectre de la bande de base. Cet étalement est réalisé par distorsion non linéaire (en DIST), extraction de la bande hautes fréquences par filtrage en BPFD et modulation en EAD de ladite bande hautes fréquences par l'information d'énergie décodée en DEC1 et fournie à travers l'élément de retard DL3. En outre, comme certains sons, les fricatifs par exemple, fournissent un niveau d'énergie très faible en bande basse, on rajoute à la sortie de DIST l'énergie fournie par un générateur de bruit blanc WN convenablement réglé (voir brevet européen déjà cité). Le signal résultant de la combinaison du bruit blanc et de l'information issue de DIST passe à travers le filtre passe-bande BPFD dont la fréquence de coupure est de 1 000 Hz. Les échantillons du signal sont introduits dans le dispositif EAD normalisant le niveau de la bande hautes fréquences sur l'information issue de DL3. La sortie de EAD est transmise à l'entrée du filtre inverse INVF. Le signal de bande de base issu de A/D3 échantillonné à kHz est retardé en DL4 puis ajouté en AD à l'information sortant du filtre inverse INVF. La sortie de AD est envoyée à un convertisseur numérique/analogique D/A3. On obtient ainsi le signal vocal à la sortie V.

Comme le montre notamment l'article de F. Sammartino et al publié à « Eurocon Fall 1979, 19$^e$ IEEE Computer Society International Conference, Washington DC », 4-7 Sept. 1979, on cherche à économiser des lignes de transmission en concentrant plusieurs conversations simultanées sur une même ligne.

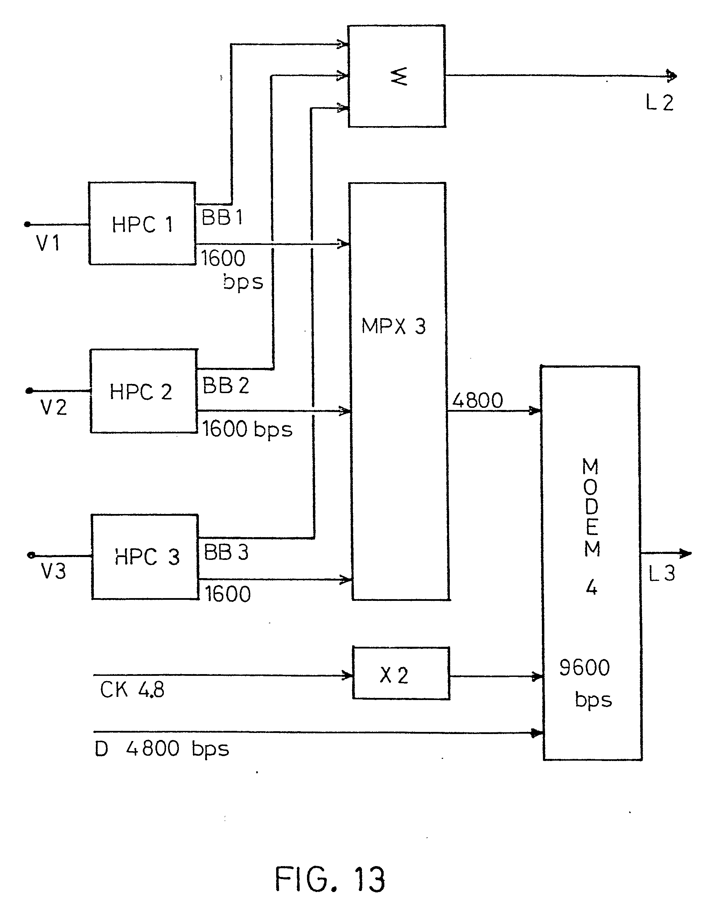

Le procédé de la présente invention se prête particulièrement bien à une réduction du nombre de lignes téléphoniques nécessaires à la transmission de voix, ou de voix et de données. En d'autres termes, à une concentration d'information voix ou voix et données provenant de N sources sur un nombre $n < N$ de lignes téléphoniques. Pour ce faire, on a choisi de regrouper et transmettre sur une même ligne les informations de bandes de base (c'est-à-dire les informations désignées par BB sur les figures 4 et 11) de plusieurs voix, tandis que les informations de bandes hautes sont codées à 1 600 bps éventuellement multiplexées avec des données et transmises sur une ligne téléphonique séparée comme le montre la figure 13.

Cette figure montre un dispositif concentrant les informations de trois sources V1, V2 et V3 fournissant des signaux de voix dans la bande de fréquences téléphoniques (250 à 3 500 Hz) et d'une source (D) de données pures à 4 800 bps sur deux lignes téléphoniques L2 et L3. Les signaux vocaux de V1, V2 et V3 sont analysés en HPC1, HPC2 et HPC3 réalisés selon les techniques décrites plus haut (voir parties désignées par HPC sur les figures 4 et 11) ; pour en extraire d'une part les bandes de base analogiques BB1, BB2 et BB3 et d'autre part les paramètres (Ei/Eo ou $k_i$ et ENERG) codés en numérique à 1 600 bps. Les trois canaux numériques à 1 600 bps sont multiplexés en MPX3 en un canal unique à 4 800 bps. Ce canal unique est lui-même multiplexé avec un canal (D) de données pures à 4 800 bps et transmis par un MODEM 4 sur une ligne téléphonique L3. L'ensemble multiplexage des deux canaux à 4 800 bps et modem est réalisé à l'aide du modem commercialisé sous la référence IBM 3865.

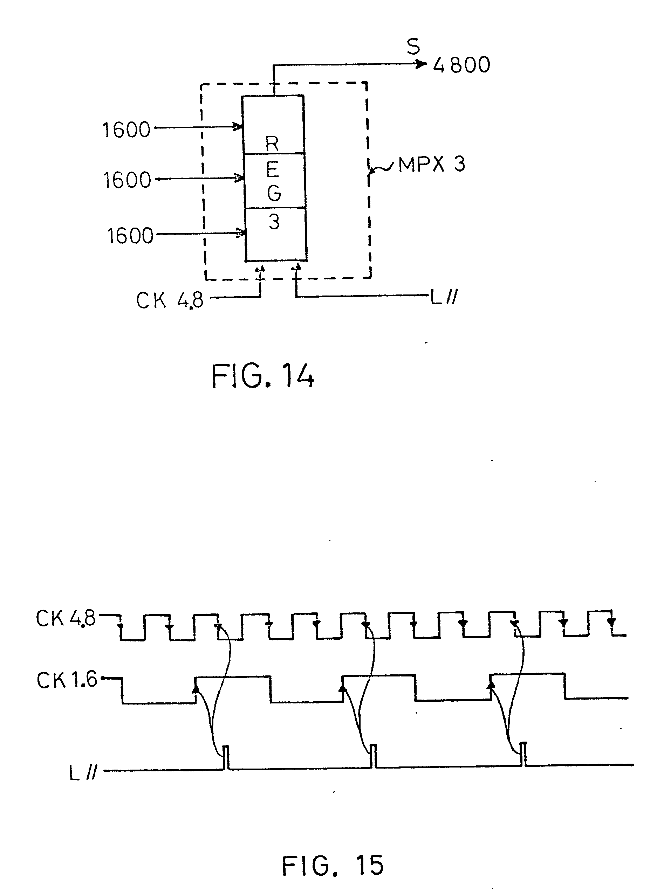

Pour ce qui est de MPX3 on le réalise selon le schéma de la figure 14. Un registre à décalage REG3 sérialise les trois canaux à 1 600 bps. Ce registre est chargé sous le contrôle d'un signal d'horloge LII à 1 600 Hz dérivé directement de l'horloge CK 4.8 KHz par division par trois selon le diagramme des temps de la figure 15. Les données à 1 600 bps arrivent et sont chargées dans REG3 sur le flanc montant de l'horloge à 1 600 Hz. Le registre REG3 est déchargé sur le flanc descendant de l'horloge CK 4,8.

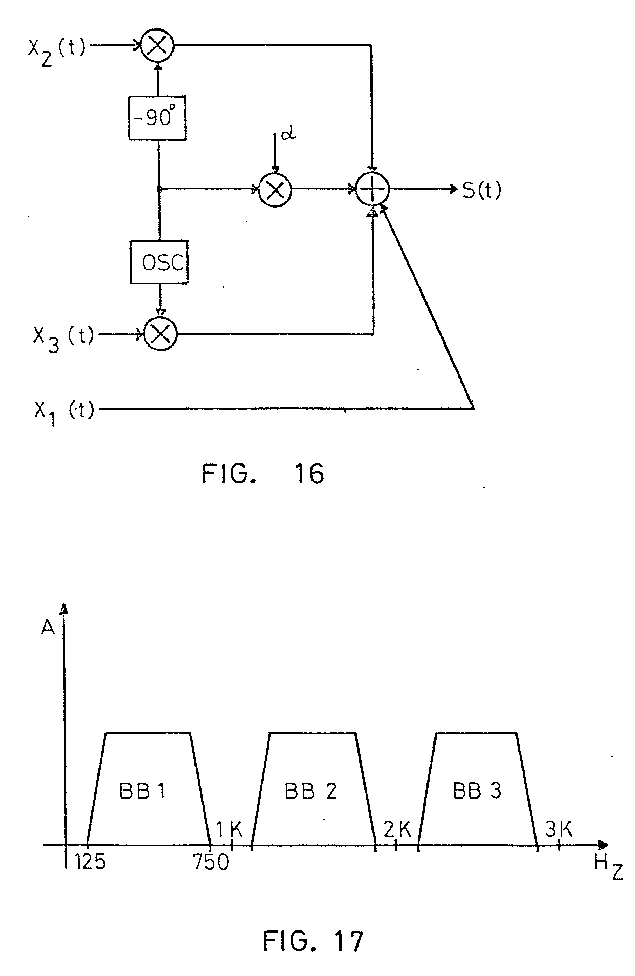

Les signaux analogiques de bandes de bases BB1, BB2 et BB3 sont multiplexés en $\Sigma$ et transmis sur la ligne L2. Il s'agit ici d'un multiplexage analogique dans le domaine des fréquences dans la bande téléphonique 250 à 3 500 Hz. Ceci peut être réalisé en utilisant les techniques connues de modulation d'amplitude à Bande Latérale Unique (BLU) suivies d'un multiplexage par simple addition. En d'autres termes, on pourrait moduler séparément en BLU les bandes de bases BB2 et BB3 pour les transposer respectivement dans les domaines de fréquences 1 000 à 2 000 Hz et 2 000 à 3 000 Hz environ, puis additionner analogiquement les bandes de base BB2 et BB3 transposées et BB1 et envoyer le tout sur la ligne téléphonique L2. Néanmoins on peut aussi transposer BB2 et BB3 dans le domaine des fréquences en utilisant un schéma mettant en œuvre le « multiplexage orthogonal » proposé par A. H. Ballard, dans « Space and Aeronautics » novembre 1962 (Orthogonal Multiplexing). Le schéma de principe est celui de la figure 16 où l'on a désigné par $x_1(t)$, $x_2(t)$ et $x_3(t)$ les signaux respectifs de BB1, BB2 et BB3. Le dispositif de modulation de la figure 16 utilise un oscillateur OSC fournissant une onde porteuse cos $(\omega_0 t)$ à 2 kHz. Cette onde est d'une part modulée par $x_3(t)$ et d'autre part déphasée de 90° avant d'être modulée par $x_2(t)$. La porteuse est aussi modulée par un coefficient d'amortissement $\alpha$ pour fournir une tonalité dite pilote, $\alpha$ cos $\omega_0 t$ en phase avec la porteuse, utile à la réception. On additionne ensuite les signaux et l'on obtient un signal composite :

$$S(t) = x_1(t) + \alpha \cos \omega_0 t + x_2(t) \cos \omega_0 t + x_3(t) \sin \omega_0 t$$

Le diagramme du spectre en fréquences de S(t) est représenté sur la figure 17.

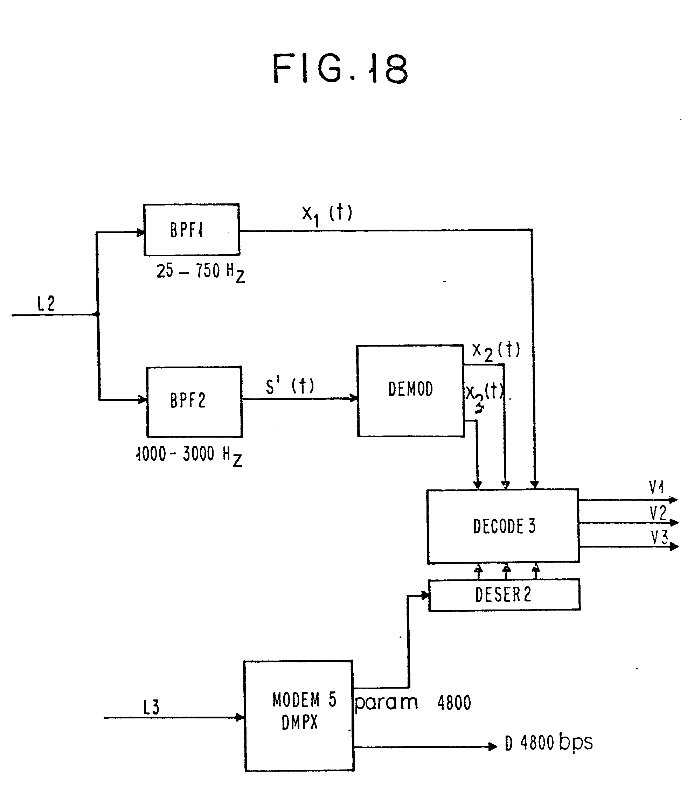

A la réception (Figure 18), le signal de la ligne L2 est filtré à l'aide de deux filtres passe-bandes BPF1 et BPF2. Le premier extrait la bande de base BB1. Le second extrait ce qui reste dans le signal reçu, soit :

$$S'(t) = \alpha \cos \omega_0 t + x_2(t) \cos \omega_0 t + x_3(t) \sin \omega_0 t$$

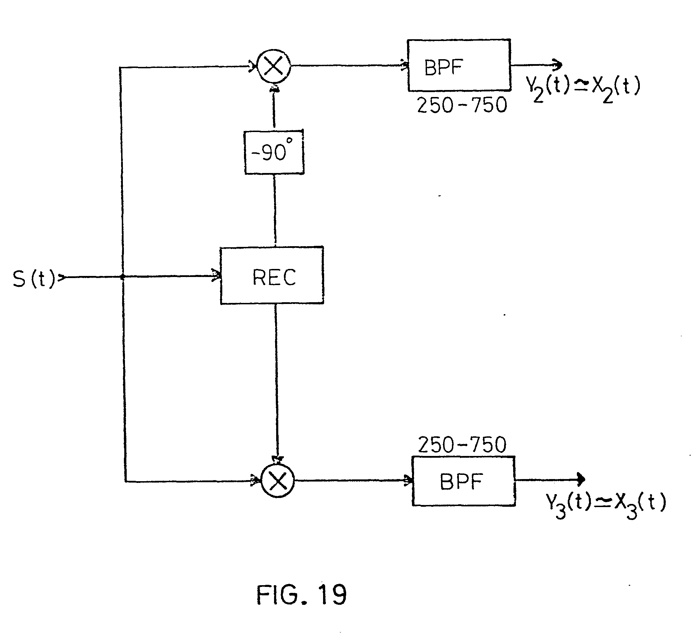

Ce signal S'(t) est traité en DEMOD dont le schéma est représenté sur la figure 19. La porteuse $\omega_0$ est extraite du signal S(t) par un filtre REC très étroit et centré sur

7

$$f_0 = \frac{\omega_0}{2\pi}.$$

Cette porteuse, utilisée à la fois directement et après déphasage de 90° pour démoduler le signal S'(t), ce qui après filtrage par des filtres BPF (de bande-passante 250 à 750 Hz), fournit $x_2(t)$ et $x_3(t)$. On dispose ainsi des trois bandes de base BB1, BB2 et BB3.

Par ailleurs, le signal reçu sur la ligne L3 est démodulé et démultiplexé à l'aide d'un modem IBM 3865 séparant les données pures (D) à 4 800 bps, des paramètres caractéristiques (Ei/Eo ou $k_i$ et ENERG) multiplexés eux-mêmes à 4 800 bps. Ces paramètres sont désérialisés en DESER2 en trois voies à 1 600 bps. Les sorties de DESER 2 ainsi que les bandes de base BB1, BB2 et BB3 sont traités en DECODE(3) d'où sortent les trois signaux vocaux V1, V2 et V3. DECODE(3) est formé de trois dispositifs semblables en parallèles du genre de ceux désignés par DECODE 2 sur les figures 10 et 12. On aura ici cependant à rajouter aux DECODE 2 des figures 10 et 12 trois éléments de retard destinés à compenser les retards de propagation entre les lignes L1 et L2.

Il est évident pour l'homme de l'art que le procédé ci-dessus , permettant de concentrer trois canaux vocaux et un canal données pures sur deux lignes téléphoniques peut être généralisé à la concentration des signaux vocaux et éventuellement de données pures provenant d'un nombre N de sources sur un nombre n de lignes téléphoniques avec n < N. Pour ce faire, il suffit d'extraire de chaque signal vocal une portion de son spectre, notamment sa bande de base, et de traiter par ailleurs ce signal vocal ou ce qu'il en reste pour en extraire des paramètres caractéristiques de la voix. Les bandes de bases seront quant à elles concentrées, par exemple par groupes de trois, sur des lignes téléphoniques. Quant aux paramètres ils seront soit multiplexés entre eux (par exemple par groupes de six), soit multiplexés avec des données pures et transmis sur des lignes téléphoniques après modulation.

## Revendications

1. Procédé de transmission simultanée sur ligne(s) téléphonique(s) de signaux vocaux et de données, du genre dans lequel :
— les signaux vocaux sont traités pour en extraire un signal dit de bande de base situé dans la bande basses fréquences du spectre du signal vocal, ledit procédé étant caractérisé en ce qu'il comporte les opérations suivantes :
— extraction du signal vocal de paramètres dits caractéristiques de la voix et codage en numérique desdits paramètres caractéristiques ;
— multiplexage de données pures avec lesdits paramètres caractéristiques codés en numérique ;
— transformation en signal (signaux) analogique(s) des données issues du multiplexage ;
— combinaison(s) analogique(s) du (des) signal (signaux) de bande(s) de base avec ledit (lesdits) signal (signaux) analogique(s) obtenu(s) à partir des données issues du multiplexage ; et
— transmission sur ladite (lesdites) ligne(s) téléphonique(s) dudit signal (desdits signaux) résultant de ladite (desdites) combinaison(s) analogique(s).

2. Procédé de transmission selon la revendication 1 caractérisé en ce que ladite extraction du signal vocal de paramètres dits caractéristiques est effectuée selon les techniques des vocodeurs dits à bande de base et comporte les opérations suivantes :
— filtrage du signal vocal en plusieurs sous-bandes dont la juxtaposition couvre une bande dite hautes fréquences du signal vocal ; et
— extraction d'informations relatives à l'énergie du signal contenu dans chacune desdites sous-bandes, pour en déduire lesdits paramètres caractéristiques de la voix.

3. Procédé de transmission selon la revendication 2 caractérisé en ce que ladite énergie du signal contenu dans chacune desdites sous-bandes est mesurée sur des tronçons de signal vocal de durée prédéterminée.

4. Procédé de transmission selon la revendication 3 caractérisé en ce que ladite énergie du signal contenue dans chacune des sous-bandes est normalisée par rapport à l'énergie contenue dans la bande de base.

5. Procédé de transmission selon la revendication 1 caractérisé en ce que ladite extraction du signal vocal de paramètres caractéristiques est effectuée selon les techniques des vocodeurs dits prédictifs et comporte les opérations suivantes :
— extraction d'une information ENERG traduisant l'énergie de la partie hautes-fréquences du signal vocal ;
— codage en numérique de ladite information ENERG ;
— extraction dudit signal vocal d'une information COEF contenant des coefficients $k_i$ dits de corrélation partielle, codés numériquement ; et
— multiplexage desdites informations ENERG et COEF codées numériquement, en un train unique de bits.

6. Procédé de transmission selon l'une des revendications 1 à 5 caractérisé en ce que ladite transformation en un signal analogique des données issues du multiplexage est obtenue par modulation.

8

0 070 949

7. Procédé de transmission selon la revendication 7 caractérisé en ce que ladite combinaison du signal analogique de bande de base avec ledit signal analogique obtenu par modulation est obtenue par une simple addition analogique.

8. Procédé de concentration des informations provenant de N sources de signaux vocaux et de données sur des lignes téléphoniques en nombre n inférieur à N, ledit procédé comportant les opérations suivantes :

— traitement des signaux vocaux pour en extraire des signaux analogiques dits de bandes de base situés dans la bande basses fréquences du spectre du signal vocal ;

— extraction de chacun desdits signaux vocaux de paramètres dits caractéristiques de la voix et codage en numérique desdits paramètres ;

— groupage des signaux de bandes de base en groupes prédéterminés ;

— combinaison des signaux de bandes de base au sein de chaque groupe et transmission sur ligne téléphonique du signal résultant de ladite combinaison ;

— groupage des paramètres caractéristiques en groupes prédéterminés ;

— multiplexage des paramètres d'un même groupe avec des données pures ;

— modulation de l'information résultant dudit multiplexage ; et

— transmission sur ligne téléphonique du signal résultant de ladite modulation.

9. Procédé selon la revendication 8 caractérisé en ce que ladite extraction de paramètres caractéristiques est effectuée selon les techniques des vocodeurs dits à bande de base et comporte les opérations suivantes :

— filtrage du signal vocal en plusieurs sous-bandes dont la juxtaposition couvre une bande hautes fréquences du signal vocal ; et

— extraction d'informations relatives à l'énergie du signal contenu dans chacune desdites sous-bandes pour en déduire lesdits paramètres caractéristiques.

10. Procédé selon la revendication 9 caractérisé en ce que ladite énergie du signal contenu dans chaque sous-bande est mesurée sur des tronçons de signal vocal de durée prédéterminée.

11. Procédé selon la revendication 10 caractérisé en ce que l'énergie du signal contenu dans chacune des sous-bandes est normalisée par rapport à l'énergie contenue dans la bande de base correspondante.

12. Procédé selon la revendication 8 caractérisé en ce que ladite extraction de paramètres caractéristiques est effectuée selon les techniques des vocodeurs dits prédictifs et comporte les opérations suivantes :

— extraction de chaque signal vocal d'une information ENERG traduisant l'énergie de la partie hautes-fréquences dudit signal vocal ;

— codage en numérique de ladite information ENERG ;

— extraction de chaque signal vocal d'une information COEF contenant des coefficients $k_i$ dits de corrélation partielle codés numériquement ; et

— multiplexage desdites informations ENERG et COEF en un train unique de bits.

13. Procédé selon l'une des revendications 8 à 12 caractérisé en ce que ladite combinaison des signaux de bandes de base au sein de chaque groupe comporte les opérations suivantes :

— transposition du spectre d'au moins une des bandes de base par modulation de type dit à bande latérale unique ; et

— addition analogique des bandes de base éventuellement transposées.

14. Dispositif de transmission sur une même ligne téléphonique d'un signal vocal et de données pures comportant des moyens de filtrage (FB) recevant en entrée ledit signal vocal et fournissant d'une part une bande basses-fréquences dite bande de base et d'autre part des sous-bandes hautes fréquences ; ledit dispositif étant caractérisé en ce qu'il comporte :

— des moyens de mesure d'énergie (EN, Ei/EO) reliés auxdits moyens de filtrage et déterminant la valeur de l'énergie contenue, durant un intervalle de temps donné, dans chacune desdites sous-bandes, énergies normalisées par rapport à l'énergie contenue dans la bande de base durant ledit intervalle de temps donné ;

— des moyens de codage (CODE) en numérique desdites énergies normalisées représentant des paramètres caractéristiques de la voix, lesdits moyens de codage étant reliés aux moyens de mesure d'énergie ;

— des moyens de multiplexage (MPX1) reliés auxdits moyens de codage et à au moins une source de données pures ;

— des moyens de modulation (MODEM 1) reliés auxdits moyens de multiplexage ; et

— des moyens d'addition analogique (AD) additionnant le signal de ladite bande à celui fourni par lesdits moyens de modulation, et attaquant ladite ligne téléphonique.

15. Dispositif de transmission selon la revendication 14 caractérisé en ce que lesdits moyens de filtrage comportent un banc de filtres numériques (FB) pourvu de moyens dits de décimation permettant de maintenir la quantité d'information constante à travers ledit banc de filtres.

16. Dispositif de transmission sur lignes téléphoniques de signaux vocaux et de données pures, ledit dispositif comporte :

— des moyens de traitement (HPC1, HPC2, HPC3) extrayant de chacun desdits signaux vocaux un

9

signal analogique de bande de base, et un ensemble de paramètres caractéristiques de la voix codés numériquement ;

— des moyens d'addition (Σ) reliés auxdits moyens de traitement pour additionner entre eux des signaux de bandes de base et envoyer le signal résultant de ladite addition sur une première ligne téléphonique (L2) ;

— des premiers moyens de multiplexage (MPX3) reliés auxdits moyens de traitement et multiplexant des paramètres caractéristiques de plusieurs voix en un train unique de bits ;

— des seconds moyens de multiplexage (MODEM 4) reliés auxdits premiers moyens de multiplexage et recevant par ailleurs lesdites données pures ;

— des moyens de modulation (MODEM 4) reliés auxdits seconds moyens de multiplexage et attaquant une seconde ligne téléphonique.

### Claims

1. A method for simultaneously transmitting voice and data signals over one or more telephone lines, of the type wherein :

— the voice signals are processed to extract therefrom a baseband signal contained in the low-frequency band of the voice signal spectrum, said method being characterized in that it includes the steps of :

— extracting from each of said voice signals so-called characteristic voice parameter and digitally encoding said parameters ;

— multiplexing together pure data and said digitally encoded characteristic parameters ;

— converting the data resulting from said multiplexing step into one or more analog signals ;

— performing one or more analog combinations of said baseband signal(s) with said analog signal(s) derived from the data resulting from said multiplexing step ; and

— transmitting over said telephone line(s) said signal(s) resulting from said analog combination(s).

2. The transmission method of claim 1, characterized in that said step of extracting characteristic parameters from the voice signal is performed by means of so-called baseband vocoder techniques and includes the steps of :

— filtering the voice signal to provide several subbands whose juxtaposition covers the high-frequency band of the voice signal ; and

— measuring the energy of the signal containing in each of said subbands to derive said characteristic voice parameters therefrom.

3. The transmission method of claim 2, characterized in that said energy measurement is performed on voice signal segments of predetermined duration.

4. The transmission method of claim 3, characterized in that said energy of the signal contained in each of said subbands is normalized with respect to the energy contained in the baseband.

5. The transmission method of claim 1, characteristic in that said step of extracting characteristic parameters from said voice signal is performed by means of so-called predictive vocoder techniques and includes the steps of :

— extracting an information item termed ENERG representative of the energy of the high-frequency portion of the voice signal ;

— digitally encoding said ENERG information item ;

— extracting from said voice signal an information item termed COEF containing digitally encoded so-called partial correlation coefficients $k_i$ ; and

— multiplexing together said digitally encoded ENERG and COEF information items to form a single train of bits.

6. The transmission method of any one of claims 1 to 5, characterized in that said conversion of the data resulting from the multiplexing step into an analog signal is achieved by means of a modulation process.

7. The transmission method of claim 6, characterized in that said combination of the analog baseband signal with said analog signal resulting from a modulation process is achieved by means of a simple analog addition.

8. A method of concentrating information from N voice and data signal sources onto n telephone lines, where N is greater than n, said method including the steps of :

— processing the voice signals to extract therefrom so-called analog baseband signals contained in the low-frequency band of the voice signal spectrum :

— extracting from each of said voice signals so-called characteristic voice parameters and digitally encoding said parameters ;

— forming the baseband signals into predetermined groups ;

— combining the baseband signals within each of said groups and transmitting the resultant signal over a telephone line ;

— forming the characteristic parameters into predetermined groups ;

— multiplexing together the parameters within a given group and pure data ;

— modulating the information resulting from said multiplexing step ; and

— transmitting the signal resulting from said modulation over a telephone line.

9. The method of claim 8, characterized in that said extraction of said characteristic parameters is performed by means of so-called baseband vocoder techniques and includes the steps of :

— filtering the voice signal to provide several subbands the juxtaposition of which covers a high-frequency band of the voice signal ; and

— measuring the energy of the signal contained in each of said subbands to derive said characteristic parameters therefrom.

10. The method of claim 9, characterized in that said energy measurement is performed on voice signal segments of predetermined duration.

11. The method of claim 10, characterized in that the energy of the signal within each subband is normalized with respect to the energy contained in the corresponding baseband.

12. The method of claim 8, characterized in that said extraction of said characteristic parameters is performed by means of so-called predictive vocoder techniques and includes the steps of :

— extracting from each voice signal an information item termed ENERG representative of the energy of the high-frequency portion of said voice signal ;

— digitally encoding said ENERG information item ;

— extracting from each voice signal an information item termed COEF that contains digitally encoded partial correlation coefficients $k_i$ ; and

— multiplexing together said ENERG and COEF information items to fort a single train of bits.

13. The method of any one of claims 8 to 12, characterized in that said step of combining the baseband signals within each group includes the steps of :

— subjecting at least one of said baseband signals to a single-sideband type of modulation ; and

— performing an analog addition of the baseband signals subjected to said modulation.

14. A device for transmitting voice and pure data signals over a single telephone line, including filter means (FB) receiving as input said voice signal and supplying a low-frequency band termed baseband and high-frequency subbands, said device being characterized in that it includes :

— energy measuring means (EN, Ei/EO) connected to said filter means for determining the value of the energy contained during a given time interval in each of said subbands, all such energies being normalized with respect to the energy contained in the baseband during said given time interval ;

— encoding means (CODE) for digitaly encoding said normalized energies representing characteristic voice parameters, said encoding means being connected to said energy measuring means ;

— multiplexing means (MPX1) connected to said encoding means and to at least one source of pure data ;

— modulating means (MODEM 1) connected to said multiplexing means ; and

— analog adding means (AD) for adding said baseband signal to the signal supplied by said modulating means, and for driving said telephone line.

15. The transmission device of claim 14, characterized in that said filter means includes a bank of digital filters (FB) provided with so-called decimation means for maintaining the volume of information through said bank of filters at a constant level.

16. A device for transmitting voice and pure data signals over telephone lines, said device including :

— processing means (HPC1, HPC2, HPC3) for extracting from each of said voice signals an analog baseband signal and a set of digitally encoded characteristic voice parameters ;

— adding means ($\Sigma$) connected to said processing means for adding baseband signals together and sending the resultant signal over a first telephone line (L2) ;

— first multiplexing means (MPX3) connected to said processing means for multiplexing together the characteristic parameters of several voice signals to form a single train of bits ;

— second multiplexing means (MODEM 4) connected to said first multiplexing means and receiving said pure data ; and

— modulation means (MODEM 4) connected to said second multiplexing means and driving means and driving a second telephone line.

**Patentansprüche**

1. Verfahren für die gleichzeitige Übertragung von Stimm- und Datensignalen auf einer oder mehreren Fernsprechleitungen, in einer Art, in der :

— die Stimmsignale verarbeitet werden, um ein sogenanntes Grundbandsignal zu erzeugen, das sich im Band der Niedrigfrequenzen des Spektrums des Stimmsignals befindet, wobei das Verfahren dadurch gekennzeichnet ist, dass es folgende Vorgänge enthält :

— Gewinnung von sogenannten stimmcharakteristischen Parametern aus dem Stimmsignal und digitale Kodierung der besagten charakteristischen Parameter ;

— Multiplexierung der reinen Daten mit den digital kodierten besagten charakteristischen Parametern :

— Umwandlung in ein Analogsignal (mehrere Analogsignale) der aus der Multiplexierung erhaltenen Daten ;

— Analogkombination(en) des (der) Signals (Signale) des Basisbandes (der Basisbänder) mit dem (den) besagten Analogsignal(en), das (die) aus den Daten der Multiplexierung erhalten wurde(n) ; und

— Übertragung auf der (dn) besagten Fernsprechleitung(en) des besagten Signals (der besagten Signale), das (die) sich aux der (den) besagten Analogkombination(en) ergibt (ergeben).

2. Übertragungsverfahren gemäss Anspruch 1, dadurch gekennzeichnet, dass die besagte Gewinnung von sogenannten charakteristischen Parametern aus dem Stimmsignal nach Techniken von sogenannten Stimmkodiergeräten mit Basisband erfolgt und folgende Vorgänge enthält :

— Filterung des Stimmsignals in mehrere Unterbänder, deren Nebeneinanderstellung ein sogenanntes Hochfrequenzband des Stimmsignales abdeckt ; und

— Gewinnung von Informationen über die Energie des in jedem der besagten Unterbänder enthaltenen Signals, um daraus die besagten stimmcharakteristischen Parameter abzuleiten.

3. Übertragungsverfahren gemäss Anspruch 2, dadurch gekennzeichnet, dass die besagte Energie des in jedem der besagten Unterbänder enthaltenen Signals an Abschnitten des Stimmsignals mit vorgegebener Dauer gemessen wird.

4. Übertragungsverfahren gemäss Anspruch 3, dadurch gekennzeichnet, dass die besagte Energie des in jedem der Unterbänder enthaltenen Signals genormt wird, in Bezug auf die im Basisband enthaltene Energie.

5. Übertragungsverfahren gemäss Anspruch 1, dadurch gekennzeichnet, dass die besagte Gewinnung charakteristischer Parameter aus dem Stimmsignal nach den Techniken der sogenannten prädiktiven Stimmkodierer ausgeführt wird und folgende Vorgänge enthält :

— Gewinnung einer Information ENERG, welche die Energie des Hochfrequenzteils des Stimmsignals wiedergibt ;

— digitale Kodierung der besagten ENERG-Information ;

— Gewinnung einer Information COEF aus dem besagten Stimmsignal, welche die Beiwerte $k_i$ enthält, sogenannte Beiwerte für teilweise Korrelation, die digital kodiert sind ; und

— Multiplexierung der besagten digital kodierten Informationen ENERG und COEF in einer einzigen Bitfolge.

6. Übertragungsverfahren gemäss einem der Ansprüche 1 bis 5, dadurch gekennzeichnet, dass die besagte Umwandlung der aus der Multiplexierung gewonnenen Daten in ein Analogsignal durch Modulation erreicht wird.

7. Übertragungsverfahren gemäss Anspruch 7, dadurch gekennzeichnet, dass die besagte Kombination des Analogsignals des Basisbandes mit dem besagten durch Modulation erhaltenen Analogsignal durch einfache Analogaddition erhalten wird.

8. Verfahren für die Konzentration von Informationen von N Stimmsignalquellen und Daten auf Fernsprechleitungen in einer Anzahl n, die geringer als N ist, wobei das besagte Verfahren folgende Vorgänge enthält :

— Verarbeitung der Stimmsignale, um daraus die sogenannten Basisband-Analogsignale zu gewinnen, die sich im Band der Niedrigfrequenzen des Spektrums des Stimmsignals befinden ;

— Gewinnung von sogenannten stimmcharakteristischen Parametern aus jedem der besagten Stimmsignale und Kodierung der besagten Parameter in Digitalwerte ;

— Gruppierung der Basisbandsignale in vorgegebene Gruppen ;

— Kombination der Basisbandsignale innerhalb einer jeden Gruppe und Übertragung des sich aus der besagten Kombination ergebenden Signals auf der Fernsprechleitung ;

— Gruppierung der charakteristischen Parameter in vorgegebene Gruppen,

— Multiplexierung der Parameter einer gleichen Gruppe mit reinen Daten ;

— Modulation der Information, die sich aus der besagten Multiplexierung ergibt ; und

— Übertragung des sich aus der besagten Modulation ergebenden Signals auf der Fernsprechleitung.

9. Verfahren gemäss Anspruch 8, dadurch gekennzeichnet, dass die besagte Gewinnung der charakteristischen Parameter nach den Techniken der sogenannten Stimmkodiergeräte mit Basisband durchgeführt wird und folgende Vorgänge enthält :

— Filterung des Stimmsignals in mehrere Unterbänder, deren Anordnung nebeneinander einen Hochfrequenzbereich des Stimmsignals abdeckt ;

— Gewinnung von Informationen über die Energie des injedem der Unterbänder enthaltenen Signals, um daraus die besagten charakteristischen Parameter abzuleiten.

10. Verfahren gemäss Anspruch 9, dadurch gekennzeichnet, dass die besagte Energie des in jedem Unterband enthaltenen Signals auf Abschnitten des Stimmsignals von vorgegebener Dauer gemessen wird.

11. Verfahren gemäss Anspruch 10, dadurch gekennzeichnet, dass die Energie des in jedem der Unterbänder enthaltenen Signals in Bezug auf die im entsprechenden Basisband enthaltene Energie genormt wird.

12. Verfahren gemäss Anspruch 8, dadurch gekennzeichnet, dass die besagte Gewinnung charakteristischer Parameter nach den Techniken der sogenannten prädiktiven Stimmkodiergeräte vorgenommen wird und folgende Vorgänge enthält :

— Gewinnung einer Information ENERG aus jedem Stimmsignal, welche die Energie des Hochfrequenzteils des besagten Stimmsignals wiedergibt ;

— digitale Kodierung der besagten Information ENERG ;

— Gewinnung einer Information COEF aus jedem Stimmsignal, welche sogenannte Teilkorrelationsbeiwerte $k_i$ enthält, die digital kodiert sind ; und

— Multiplexierung der sogenannten Informationen ENERG und COEF in einer einzigen Bitfolge.

13. Verfahren gemäss einem der Ansprüche 8 bis 12, dadurch gekennzeichnet, dass die besagte Kombination der Bandsignale innerhalb einer jeden Gruppe folgende Vorgänge enthält :

— Übertragung des Spektrums von mindestens einem der Basisbänder durch Modulation vom sogenannten Typ mit einem einzigem Seitenband ; und

— Analogaddition der eventuell übertragenen Basisbänder.

14. Vorrichtung für die Übertragung von einem Stimmsignal und reinen Daten auf einer einzigen Leitung, mit Filtermitteln (FB), welche am Eingang das besagte Stimmsignal aufnehmen und einerseits ein Basisband genanntes Niederfrequenzband bereitstellen und andererseits Hochfrequenzunterbänder, dadurch gekennzeichnet, dass sie enthält :

— Mittel für die Messung der Energie (EN, Ei/EO), die mit den besagten Filtermitteln verbunden sind und den Wert der in einem gegebenen Zeitintervall in jedem der besagten Unterbänder enthaltenen Energie ermitteln, wobei die Energien in Bezug auf die im besagten Zeitintervall im Basisband enthaltene Energie genormt werden ;

— Mittel für die digitale Kodierung (CODE) der besagten genormten Energien, welche die charakteristischen Stimmparameter darstellen, wobei diese Kodiermittel an die Mittel für die Messung der Energie gebunden sind ;

— Multiplexiermittel (MPX1), die an die besagten Kodiermittel und an mindestens eine Quelle reiner Daten gebunden sind ;

— Modulationsmittel (MODEM 1), die an die besagten Multiplexiermittel gebunden sind ; und

— Mittel für Analogaddition (AD), welche das Signal des besagten Grundbandes zu dem addieren, das von den besagten Modulierungsmitteln geliefert wird und die besagte Fernsprechleitung ansteuern.

15. Übertragungsvorrichtung gemäss Anspruch 14, dadurch gekennzeichnet, dass die besagten Filtermittel eine Bank digitaler Filter (FB) enthalten, die mit den besagten Dezimierungsmittel versehen ist, um die Informationsmenge durch die besagte Filterbank konstant zu halten.

16. Vorrichtung für die Übertragung von Stimmsignalen und reinen Daten auf Fernsprechleitungen, welche enthält :

— Verarbeitungsmittel (HPC1, HPC2, HPC3), welche aus jedem der besagten Stimmsignale ein analoges Basisbandsignal und eine Einheit digital kodierter charakteristischer Stimmparameter entnehmen ;

— Summiermittel (Σ), die mit dem besagten Bearbeitungsmittel verbunden sind, um untereinander die Basisbandsignale zu addieren und um das Signal, das sich aus der besagten Addition ergibt, auf eine erste Fernsprechleitung (L2) zu senden ;

— erste Multiplexiermittel (MPX3), die mit den besagten Bearbeitungsmitteln verbunden sind und die charakteristischen Parametern mehrerer Stimmen zu einer einzigen Bitfolge multiplexieren ;

— zweite Multiplexiermittel (MODEM 4), die an die besagten ersten Multiplexiermittel gebunden sind und von anderer Seite die besagten reinen Daten empfangen ;

— Modulationsmittel (MODEM 4), die mit den besagten zweiten Multiplexiermitteln verbunden sind und eine zweite Fernsprechleitung ansteuern.

13

# FIG. 2

B0    B1    B2    B3    --- --- --- B8

1000 H

3500 H

# FIG. 1

IN → B0 → BB → CODE MPX → L

B1 → D1 → LP1 → E1

B2 → D2 → LP2 → E2

B8 → D8 → LP8 → E8

# FIG. 3

FIG. 4

3

FIG.5

| VALEUR DECIMALE | NIVEAU |
|---|---|
| 1 | 0 |
| 2 | 1 |
| 4 | 2 |
| 8 | 3 |
| 16 | 4 |
| 32 | 5 |
| 64 | 6 |
| 128 | 7 |
| 192 | 8 |
| 256 | 9 |
| 384 | 10 |
| 512 | 11 |
| 768 | 12 |
| 1024 | 13 |
| 1536 | 14 |
| 2048 | 15 |

0 070 949

FIG. 6

FIG. 7

FIG. 8

FIG. 9

7

FIG. 10

0 070 949

FIG. 11

# FIG.12

DECODE2

10

HPF1 → MODEM (3) → DMPX (2)

DMPX (2):
- ENERG 200 bps → DEC1 → DL3
- A/D3 8 kHz → DL5 → DIST
- 1400 bps COEF → DL6 → DEC2 → INVF
- LPF1

WN → DIST → (+) → BPFD. → 8 KHz → EAD

HB

DL4 → AD'

INVF → (+) → D/A3 → V

AD'

D 4800 bps

0 070 949

FIG. 13

FIG. 14

FIG. 15

FIG. 16

FIG. 17

# FIG.18

FIG. 19